# EUROPEAN PATENT APPLICATION

(11) **EP 4 138 008 A1**
(43) Date of publication of application: **22.02.2023**
(21) Application number: 21788077.2
(22) Date of filing: 05.03.2021
(51) Int. Cl.: G06Q 10/06, G06Q 50/04

(54) **ENERGY SUPPLY/DEMAND OPERATION GUIDANCE DEVICE AND METHOD FOR ENERGY SUPPLY/DEMAND OPERATION IN IRONWORKS**

(30) Priority: 15.04.2020 JP 2020072686
(71) Applicant: JFE Steel Corporation, Tokyo 100-0011 (JP)
(72) Inventor: UNO Masahiro, Tokyo 100-0011 (JP); OGASAHARA Tomoyoshi, Tokyo 100-0011 (JP); AOYAMA Takayasu, Tokyo 100-0011 (JP); TASHIMA Yuki, Tokyo 100-0011 (JP)
(74) Representative: Grünecker Patent- und Rechtsanwälte PartG mbB
(86) International application number: PCT/JP2021/008593
(87) International publication number: WO 2021/210290

(57) **Abstract**

Proposed are an energy supply/demand management guidance device and a method of energy supply/demand management in an ironworks, which allow a message to be specifically and quantitatively outputted in real time. The device includes an optimization calculation unit that uses a plant model and a cost model, the plant model describing a supply/demand balance of gas, steam, and power in the ironworks, the cost model describing a supply/demand management cost of the ironworks, to predict, based on model parameters composed of a latest value of a variable included in the plant model collected and set values of the plant model and the cost model, optimum supply/demand quantities of the gas, steam, and power in the ironworks and a time when a plant management limit is reached, a display item selection unit that selects at least one selected from at least one of future optimum supply/demand quantities calculated and a task condition to be changed in the future determined based on current actual supply/demand quantities, and the predicted time when the plant management limit is reached, and an alarm output unit that has a function of outputting a display item selected.

## Description

### Technical Field

The present invention relates to an energy supply/demand management guidance device that assists a task of operating supply/demand of gas, steam, and power in an ironworks and to a method of energy supply/demand management in the ironworks.

### Background Art

Typically, in ironworks, blast furnace gas (B gas) generated as a by-product from a blast furnace, coke gas (C gas) generated from a coke oven, and converter gas (LD gas) generated from an LD converter are reused directly or mixed to form mixed gas (M gas) and then reused in factories or private power generation facilities. In a case where gas is used such that there is a surplus of the gas beyond a level of a gas holder storing the gas, it is required to dissipate the surplus of the gas in the air, resulting in a loss. On the other hand, in a situation where there is a shortage of the gas due to a gas demand quantity being higher than a gas supply quantity, the shortage of the gas affects running of the factories, also resulting in a loss. Thus, in ironworks, it is necessary to manage gas appropriately depending on a gas demand quantity.

Furthermore, in ironworks, it is also necessary to manage steam appropriately in a similar manner to gas, and a shortage of the steam in particular should be avoided. That is, it is necessary that, in addition to a supply quantity of steam from a waste heat boiler using the LD gas, a supply quantity of steam obtained by bleeding from a steam turbine (extracting steam from some midpoint of the turbine) for private power generation such as BTG (Boiler steam-Turbine Generator) or CDQ (Coke Dry Quenching system) be managed so as not to be insufficient for a steam demand quantity. Furthermore, power is restricted not to exceed an upper limit value of a quantity externally received.

As described above, in ironworks, it is required to manage gas, steam, and power at a reduced cost. With this as a background, there have been proposed techniques for optimizing management in terms of cost in ironworks or plants that supply various types of energy. Specifically, Patent Literatures 1 and 2 describe an approach in which a plant and a running cost thereof are formulated within a framework of mathematical programming and various optimization approaches are used to obtain an optimum management plan for the plant. Furthermore, Patent Literature 3 discloses an energy supply/demand adjustment method based on a future production plan. Furthermore, Patent Literature 4 discloses a method of energy management in an ironworks in which gas energy supply/demand management is performed by controlling supply of by-product gas to a power plant in accordance with a pattern for supplying the by-product gas in a calculated supply quantity.

### Citation List

### Patent Literature

Patent Literature 1: International Publication No. WO 2015/093262
Patent Literature 2: International Publication No. WO 2015/174359
Patent Literature 3: JP-A-H08-44403
Patent Literature 4: JP-A-S63-259004

### Summary of Invention

### Technical Problem

The above-described conventional techniques, however, have presented the following problem yet to be solved.

In the conventional techniques described in Patent Literatures 1 to 4, although results of calculation for minimizing a utility cost are outputted, the outputted results are only about quantities of various utilities for minimizing the utility cost, and thus it has been disadvantageously necessary that a managing operator performing monitoring in an operation room unravel relationships between various utilities and the quantities thereof so as to specifically find out which of the utilities should be changed to which extent.

The present invention has been made in view of the above-described circumstances, and an object of the present invention is to provide a method for specifically and quantitatively outputting, concurrently with alarm issuance, a message in real time based on an order of priority and a method for previously outputting, concurrently with alarm issuance, a specific and quantitative message indicating, for example, that management upper and lower limits of a utility facility are reached.

### Solution to Problem

An energy supply/demand management guidance device according to the present invention, which has been developed to solve the above-described problem and to achieve the above-described object, is an energy supply/demand management guidance device that assists a task of managing supply/demand of gas, steam, and power in an ironworks. The energy supply/demand management guidance device includes
an optimization calculation unit that uses a plant model and a cost model, the plant model describing a supply/demand balance of the steam and the power in the ironworks, input/output characteristics of a private power generation facility that uses the gas and the steam to generate power and a gas holder that stores the gas, and a gas supply/demand balance among a gas supply quantity of the ironworks, a gas demand quantity of the ironworks, and a gas supply quantity from a gas company, the cost model describing a supply/demand management cost of the ironworks, to predict, based on model parameters composed of a latest value of a variable included in the plant model collected and set values of the plant model and the cost model, optimum supply/demand quantities of the gas, the steam, and the power in the ironworks and a time when a plant management limit is reached,
a display item selection portion unit that selects at least one selected from at least one of future optimum supply/demand quantities calculated by the optimization calculation unit and a task condition to be changed in the future determined based on current actual supply/demand quantities, and the time when the plant management limit is reached predicted by the optimization calculation unit, and
an alarm output unit that has a function of outputting a display item selected by the display item selection unit.

The energy supply/demand management guidance device according to the present invention is conceived to provide a more preferred solution under conditions below:
(a) The display item selection unit has a function of previously determining an order of priority and selecting an item to be outputted in a case where there is a plurality of task conditions to be changed in the future for attaining the optimum supply/demand quantities.
(b) The display item selection unit has a function of, in deciding the order of priority or in selecting the item to be outputted, learning by using one of the task conditions to be changed that has been outputted in the past and an actual task condition that has actually been changed.
(c) The display item selection unit has a function of outputting, as the time when the plant management limit is reached, predicted timing at which upper and lower limits of the gas holder are to be reached and current values thereof.

Furthermore, a method of energy supply/demand management in an ironworks according to the present invention includes a step of performing a task of managing supply/demand of gas, steam, and power in the ironworks in accordance with information outputted from the energy supply/demand management guidance device of any one of the above-described aspects.

The method of energy supply/demand management in an ironworks according to the present invention is conceived to provide a more preferred solution under the conditions below:
(d) The outputted information is a guideline for changing a quantity of purchased gas.
(e) The outputted information is a current value of a gas holder level and an amount of time taken to reach an upper limit or a lower limit thereof.
(f) The outputted information is a discharge instruction from the gas holder.

### Advantageous Effects of Invention

As described above, according to the energy supply/demand management guidance device and the method of energy supply/demand management in an ironworks according to the present invention, concurrently with alarm issuance, a message is specifically and quantitatively outputted in real time based on an order of priority, and thus it has become possible to minimize a utility cost without missing timing.

Furthermore, concurrently with alarm issuance, a message indicating that a time when management upper and lower limits of a utility management facility are reached is previously outputted, and thus leading to stabilized management of utilities.

### Brief Description of Drawings

FIG. 1 is a block diagram showing a configuration of an energy supply/demand management guidance device according to one embodiment of the present invention.
FIG. 2 is a flow diagram showing a determination method for selecting a display item according to the above-described embodiment.
FIG. 3(a) is a schematic diagram illustrating a guidance screen in the above-described embodiment, FIG. 3(b) is a schematic diagram illustrating an alarm display dialog part, and FIG. 3(c) is a schematic diagram illustrating a screen displaying details of alarm contents.

### Description of Embodiments

With reference to the appended drawings, the following describes a configuration of an energy supply/demand management guidance device and a method of energy supply/demand management in an ironworks, which are one embodiment of the present invention.

### [Plant Model and Cost Model]

First, a description is given of a plant model and a cost model used by the energy supply/demand management guidance device as one embodiment of the present invention in optimization calculation for optimizing supply/demand management of gas, steam, and power in an ironworks so as to minimize a running cost.

The plant model includes input/output characteristics of a private power generation facility (BTG, CDQ, TRT, or the like) that uses gas and steam generated in an ironworks to generate power and a gas holder that stores the gas generated in the ironworks, which are shown in Table 1 below, and restrictive conditions describing a supply/demand balance of power and the steam in the ironworks and a gas supply/demand balance among a gas supply quantity (B gas, C gas, LD gas, and M gas) of the ironworks, a gas demand quantity of the ironworks, and a gas supply quantity from a gas company, which are shown in Table 2 below, and the plant model is formulated as a mixed integer programming problem. Whether or not to execute turbine bypassing in BTG or CDQ can be determined depending on an excess or a deficiency in quantity of the steam when a quantity of bleed steam is maximized and can be formulated as a mixed integer programming problem.

**Table 1**

| | |
|---|---|
| Power generation facility | (1) BTG power generation quantity = coefficient × quantity of introduced heat (B gas, C gas, LD gas, M gas, heavy oil) - coefficient × quantity of bleed steam |
| | (2) CDQ power generation quantity (during normal operation) = coefficient × boiler steam - coefficient × quantity of bleed steam |
| | (3) CDQ power generation quantity (during turbine bypassing) = 0 |
| Gas holder | (1) Gas holder level = (charging quantity - discharging quantity) + gas holder level measured last time |

**Table 2**

| | |
|---|---|
| B gas | (1) Generation quantity (= discharging quantities of blast furnace + B gas holder) |
| | = consumption quantity (= charging quantities of factory + private power generation + B gas holder) + dissipation quantity |
| | (2) Upper limit restrictions on discharging quantity and charging quantity of B gas holder/upper and lower limit restrictions of B gas holder |
| C gas | (1) Generation quantity (= discharging quantities of coke oven + C gas holder) |
| | = consumption quantity (= charging quantities of factory + private power generation + C gas holder) + dissipation quantity |
| | (2) Upper limit restrictions on discharging quantity and charging quantity of C gas holder/upper and lower limit restrictions of C gas holder |
| LD gas | (1) Generation quantity (= discharging quantities of converter + LD gas holder) |
| | = consumption quantity (= charging quantities of factory + private power generation + LD gas holder) + dissipation quantity |
| | (2) Upper limit restrictions on discharging quantity and charging quantity of LD gas holder/upper and lower limit restrictions of LD gas holder |
| M gas | (1) Restriction that heat quantities before and after mixing are fixed (heat quantity before mixing = heat quantity after mixing) |
| | (2) Restriction on range of heat quantity of M gas (restriction that B gas, C gas, and LD gas are mixed to attain value around preset heat quantity [MJ/Nm³]) |
| | (3) Upper limit restriction on production quantity of M gas (upper limit of production volume per part time) |
| Purchased gas | (1) Compensating for deficiency: gas Consumption quantity > gas generation quantity |
| Steam | Generation quantity (steam from waste heat boiler, CDQ bleeding, boiler during turbine bypassing, etc. + quantity of externally purchased steam) = consumption quantity (factory) + dissipation quantity |
| Power | Private power generation quantity (CDQ, BTG, TRT, etc.) + quantity of purchased power - quantity of sold power - demand (factory) |
| Power generation facility | (1) Upper limit of quantity of BTG bleed steam/upper limit of quantity of CDQ bleed steam |
| | (2) Restriction on execution of BTG turbine bypassing: at shortage of steam even with maximized quantity of BTG bleed steam |
| | (3) Restriction on execution of CDQ turbine bypassing: at shortage of steam even with maximized quantity of CDQ bleed steam |

The cost model is expressed as a sum of a power cost, a steam cost, a gas cost, and a private power generation cost in an ironworks, and these costs are formulated as shown in Table 3.

**Table 3**

| | |
|---|---|
| Power | Cost of purchasing power - merit of selling power |
| Steam | Quantity of externally purchased steam + dissipation loss |
| Gas | Quantity of externally purchased steam + dissipation loss |
| Personal Power Generation | Cost of pure water for private power generation |

### [Configuration of Energy Supply/demand Management Guidance Device]

The energy supply/demand management guidance device as one embodiment of the present invention is a device that assists a task of managing supply/demand of by-product gas (B gas, C gas, LD gas, and M gas), steam, and power generated in an ironworks.

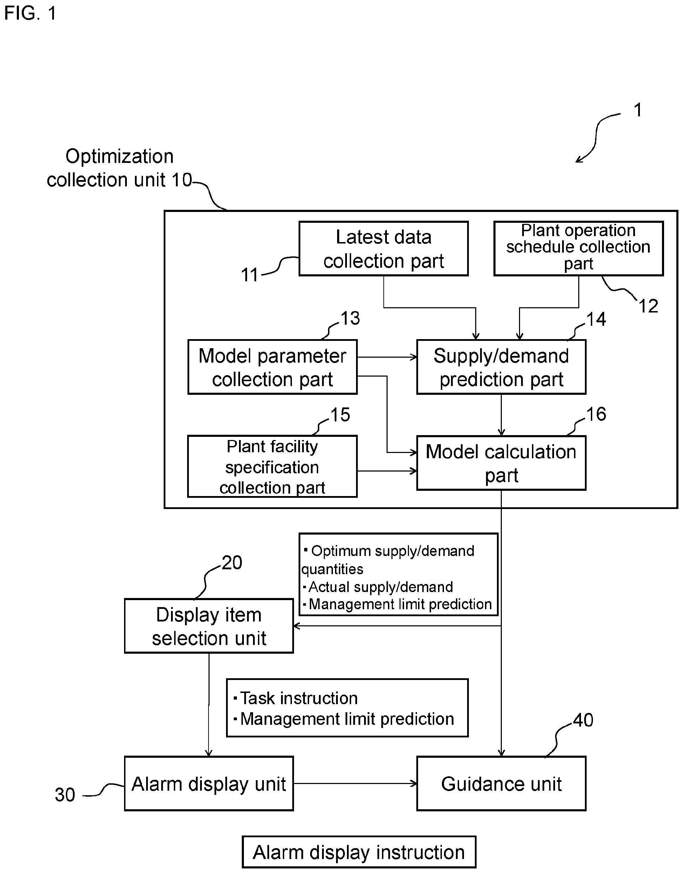

As shown in FIG. 1, an energy supply/demand management guidance device 1 of this embodiment includes an optimization calculation unit 10 that calculates optimum supply/demand quantities of gas, steam, and power, a display item selection unit 20, an alarm display unit 30, and a guidance unit 40. The energy supply/demand management guidance device 1 is configured with an information processor such as a personal computer or a workstation, and an arithmetic processing device, such as a CPU, in the information processor executes a computer program, thus implementing the energy supply/demand management guidance device 1. Moreover, there may also be provided a management cost correction part that corrects a supply/demand prediction error.

The optimization calculation unit 10 comprises a latest data collection part 11, a plant operation schedule collection part 12, a model parameter collection part 13, a supply/demand prediction part 14, a plant facility specification collection part 15, and a model calculation part 16.

The latest data collection part 11 collects latest values of variables included in the plant model shown in Tables 1 and 2 above and outputs, as actual values, the collected latest values to the supply/demand prediction part 14.

The plant operation schedule collection part 12 collects information on an operation plan of an ironworks and outputs the collected information to the supply/demand prediction part 14.

The model parameter collection part 13 collects set values of the plant model shown in Tables 1 and 2 above and the cost model shown in Table 3 above, and outputs the collected set values to the supply/demand prediction part 14 and the model calculation part 16.

The supply/demand prediction part 14 calculates, using the information outputted from the latest data collection part 11, the plant operation schedule collection part 12, and the model parameter collection part 13, supply/demand quantities of gas, steam, and power during an evaluation period and outputs information on the calculated supply/demand quantities to the model calculation part 16.

The plant facility specification collection part 15 collects operation limit values of each plant in the ironworks used for the plant model shown in Tables 1 and 2 above and outputs them to the model calculation part 16.

Using the information outputted from the model parameter collection part 13, the supply/demand prediction part 14, and the plant facility specification collection part 15, the model calculation part 16 executes, by an optimization method such as a branch-and-bound method, optimization calculation for optimizing supply/demand management of gas, steam, and power in the ironworks so as to minimize a running cost, thus calculating an optimum solution, namely, optimum supply/demand quantities.

Furthermore, the optimization calculation unit 10 predicts a time when a plant management limit is reached in a case of passive operation, for example, a time when a gas holder level reaches its upper and lower limits in that case. The optimization calculation unit 10 outputs, to the display item selection unit 20, the actual supply/demand collected, the optimum supply/demand quantities calculated, and the time when the plant management limit is reached and outputs, to the guidance unit 40, the actual supply/demand and the optimum supply/demand quantities.

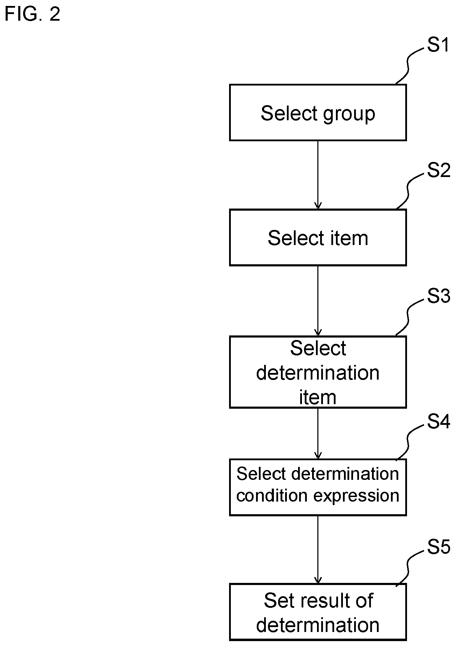

The display item selection unit 20 previously sets and registers, in accordance with a flow in FIG. 2, a determination condition for an item to be displayed; performs determination based on the registered determination condition from an obtained result of the determination, by using the information outputted from the optimization calculation unit 10; performs selection based on an order of priority and an item to be outputted, which are previously set; and outputs a task condition and the time when the plant management limit is reached to the alarm display unit.

Specifically, a procedure for setting and registering the determination condition for determining a display item in the display item selection unit 20 can include steps described below.

In a group selection step (S1), groups such as gas types, steam, and power shown in Table 2 above are registered as message categories. For example, C gas including city gas to be purchased is registered.

In an item selection step (S2), items used as after-mentioned determination items, such as an actual value, an optimum value, a passively obtained value, a cost, and a facility restriction of each of the groups, are selected from an item list. For example, an actual value and an optimum value of a quantity of the city gas purchased and an actual value and an optimum value of a C gas holder level are selected.

In a determination item setting step (S3), the determination items including a target time are registered. For example, a current actual quantity of the city gas purchased and an optimum value of the quantity of the city gas purchased 5 minutes later are selected as a "city gas increase/decrease," and a current actual value of the C gas holder level and an optimum value of the C gas holder level 5 minutes later are selected as a "C gas holder level increase/decrease."

In a determination condition expression setting step (S4), a determination condition expression is registered. For example, a case where a current actual value of the quantity of the city gas purchased is larger by not less than a predetermined quantity than the optimum value thereof 5 minutes later or a case where the optimum value of the C gas holder level 5 minutes later is larger by not less than a predetermined value than the current actual value thereof is registered as a determination expression "C gas holder decrease 1."

In a determination result setting step (S5), a combination of a message format to be outputted to the alarm display unit and the above-described determination condition expression is registered. For example, with respect to the determination expression "C gas holder decrease 1," a "city gas decrease: XX km³/h" and a "C gas holder decrease: YY km³" are combined.

From a result of the determination expression registered for each of the groups, the display item selection unit 20 selects a display item in accordance with a previously set order of priority and outputs it to the alarm display unit 30. For example, in each of the groups, a display item having the highest order of priority is extracted, and among the groups, such display items extracted respectively therefrom are arranged in a priority descending order of priority. The order of priority may be based on, for example, an economic effect calculated by a part price multiplied by a variation therein, machine learning, or the like. Furthermore, the order of priority may also be evaluated using the management cost correction value.

The alarm display unit 30 outputs, to the guidance unit 40, the display item outputted from the display item selection unit 20, such as, for example, a task instruction assigned with an order of priority or the time when the plant management limit is reached, displays an alarm in the form of a dialogue window on an upper right side on a guidance screen, and notifies a managing operator by a ringing sound or the like.

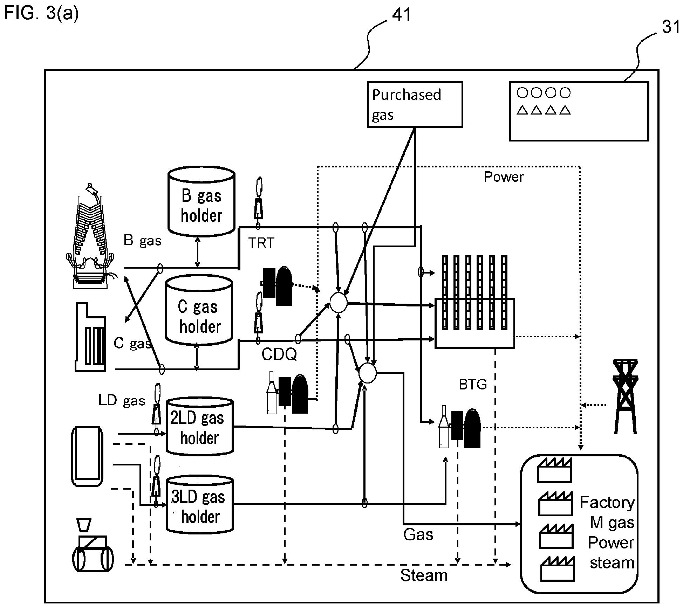

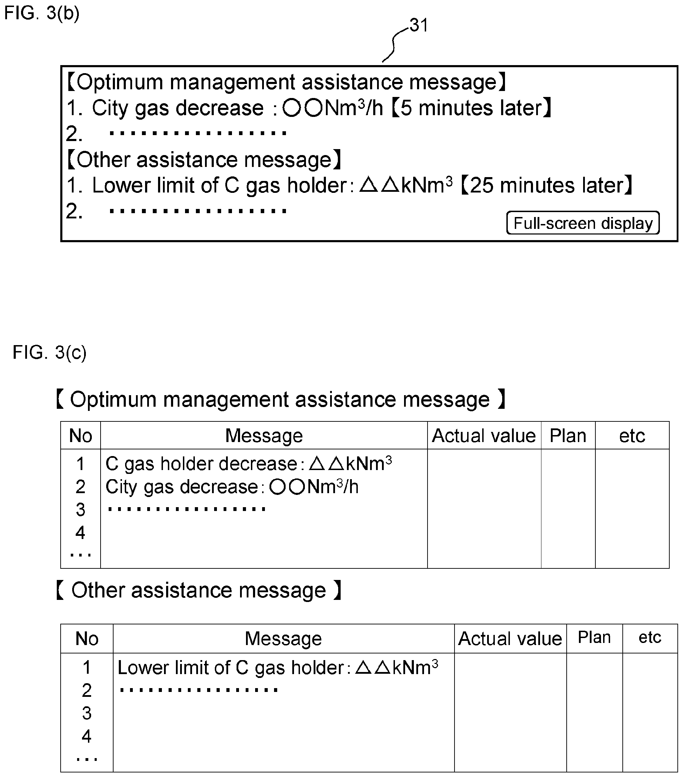

The guidance unit 40 displays, on a guidance screen 41 (FIG. 3(a)) operated by the managing operator, information outputted from the model calculation part 16 and the information outputted from the alarm display unit 30 as a guidance output related to supply/demand management of gas, steam, and power in the ironworks. The managing operator determines necessary energy supply/demand management from the task instruction (an optimum management assistance message) and the time when the plant management limit is reached (other assistance message) in an alarm display dialogue screen 31 (FIG. 3(b)) displayed on the guidance screen 41 illustrated in FIG. 3(a). Preferably, the energy supply/demand management guidance device 1 learns, from a variation in actual values of the energy supply/demand quantities or the like, for example, whether or not the task instruction outputted by the alarm display unit 30 has been adopted by the managing operator or whether or not energy supply/demand management has been changed as a result of displaying the time when the plant management limit is reached, and reflects the learned findings in future prioritization by the display item selection unit 20.

Moreover, in a case where the management cost correction part that corrects a supply/demand prediction error is provided, the following configuration is preferably employed. First, the optimization calculation unit 10 adds an optimum supply/demand management cost to an optimum solution. Further, the optimization calculation unit 10 calculates an actual value (a management cost actual value) of a supply/demand management cost of gas, steam, and power at a current time of day. Here, it can be considered that the management cost actual value is a supply/demand management cost one calculation cycle later in a case where current passive management is performed. Further, the optimum supply/demand management cost and the management cost actual value thus calculated are outputted to the management cost correction part.

The management cost correction part comprise an energy supply/demand prediction DB (database), a prediction error estimation part, a management cost increase calculation part, and an adding part.

The energy supply/demand prediction DB is formed of a non-volatile storage device and stores data of predicted values and actual values of demand quantities and supply quantities of gas, steam, and power at a point in time in the past. Here, the predicted values of the demand quantities and the supply quantities are demand quantities and supply quantities predicted one calculation cycle before a time of day when the data is stored in the energy supply/demand prediction DB.

At every predetermined calculation cycle that is a guidance operation cycle, the prediction error estimation part acquires, from the energy supply/demand prediction DB, data of predicted values and actual values of demand quantities and supply quantities of gas, steam, and power in a designated period. Using the acquired data, the prediction error estimation part calculates prediction errors (= predicted value - actual value) of the demand quantities and supply quantities of gas, steam, and power at each time of day within a period previously designated by a user. Using the calculated prediction errors of the demand quantities and supply quantities of gas, steam, and power, the prediction error estimation part estimates prediction errors of future demand quantities and future supply quantities of gas, steam, and power.

The prediction errors of future demand quantities and future supply quantities of gas, steam, and power can be estimated by, for example, calculating an average value or a weighted average value of the prediction errors of the demand quantities and supply quantities at each time of day within the designated period. The prediction errors of future demand quantities and future supply quantities of gas, steam, and power may be determined for all of the gas, steam, and power or may be individually determined only for one of interest among the gas, steam, and power.

The prediction error estimation part calculates differences between estimated values of the prediction errors of the future supply quantities of gas, steam, and power and estimated values of the prediction errors of the future demand quantities of gas, steam, and power as estimated values of the prediction errors of future supply/demand quantities of gas, steam, and power and outputs the calculated values to the management cost increase calculation part.

The management cost increase calculation part calculates an increase in supply/demand operation cost of gas, steam, and power depending on the estimated values of the prediction errors of future supply/demand quantities of gas, steam, and power outputted from the prediction error estimation part. Specifically, an increase in the prediction errors of future supply/demand quantities of gas, steam, and power leads to an increase in the supply/demand management cost of gas, steam, and power. In view of this, a relationship between prediction errors of supply/demand quantities and an increase in supply/demand management cost is previously analyzed so as to derive a function therefrom, and the estimated values of the prediction errors of supply/demand quantities outputted from the prediction error estimation part are inputted to the function, and thus the increase in supply/demand management cost can be determined. The management cost increase calculation part outputs the calculated increase in supply/demand management cost to the adding part.

The adding part calculates, as the management cost correction value, a value obtained by adding the increase in management cost outputted from the management cost increase calculation part to the optimum supply/demand management cost outputted from the optimization calculation unit. Further, the adding part outputs, to the display item selection unit 20, information related to the optimum supply/demand management cost, the management cost correction value, and the management cost actual value.

The display item selection unit 20 additionally includes the information outputted from the management cost correction part in the determination condition, determines a task condition, and outputs the task condition to the alarm display unit 30.

### (Example 1)

Using the energy supply/demand management guidance device 1 shown in FIG. 1, supply/demand management in a case of a decreasing demand quantity of M gas used in a heating furnace of a rolling mill was determined as follows.

Under various restrictions shown in Table 2, the M gas is supplied as a mixture of C gas, purchased gas, and another type of gas such as, for example, B gas or LD gas. In a steady state, the C gas and the purchased gas both need to be supplied in fixed quantities. In a case where the plant operation schedule collection part 12 collects a production plan of the rolling mill, the supply/demand prediction part 14 predicts a future decrease in demand quantity of the M gas, and a C gas holder level of the energy supply/demand management guidance device 1 has a margin, there is registered such a determination expression that a surplus of the C gas is predicted and previously discharged and a quantity of the purchased gas is reduced. In accordance with this determination and correspondingly to a future decrease in demand of the M gas, the energy supply/demand management guidance device 1 displays, on the guidance screen 41, an alarm (FIG. 3) including items with high priority that are an optimum C gas holder level in the future (for example, 5 minutes later) as timing for previously discharging the C gas and an optimum quantity of the purchased gas in the future (for example, 5 minutes later) as timing for reducing the quantity of the purchased gas. A managing operator performed management in accordance with this instruction, and thus could run a minimum-cost operation by reducing the quantity of the purchased gas. The managing operator selects a "full-screen display" button in an alarm display dialogue and thus can check details of changed task conditions shown in FIG. 3(c) other than preferentially selected task instructions.

In a conventional method, it is not until an actual value of a decrease in demand quantity of the M gas is obtained that a gas surplus is recognized, and then the C gas holder level and the quantity of the purchased gas are optimized, so that a gas purchase cost has been inferior to that in the above case. Furthermore, in a case where no alarm was displayed and only actual values and optimum values of supply/demand quantities were displayed on a guidance screen, acceptance/rejection thereof varied depending on a managing operator.

### (Example 2)

The energy supply/demand management guidance device 1 shown in FIG. 1 was used and applied to supply/demand management of LD gas in a case where blowing was performed in a plurality of converters simultaneously in a steel mill.

A generated quantity of the LD gas fluctuates depending on a form of blowing in each of the converters, a quantity of molten steel therein, overlapping of blowing times among the plurality of converters, and so on, and an LD gas holder level also increases or decreases correspondingly thereto. When an upper limit of the LD gas holder level is exceeded, it is required to dissipate a surplus of the LD gas, resulting in a loss. The plant operation schedule collection part 12 collected a blowing schedule for each of the converters, a fluctuation in generated quantity of the LD gas was predicted with high accuracy, a time when the upper limit of the LD gas holder level was reached in a case where passive management was performed and an optimum LD gas holder level after a lapse of a predetermined time was displayed in the alarm display dialogue 31 on the guidance screen 41, and a managing operator performed management of previously discharging the LD gas, so that it was made possible to avoid dissipation of the LD gas.

### Industrial Applicability

The present invention is favorably applicable to comprehensive management of a factory in which energy utilities such as gas, steam and power fluctuate depending on plant operation.

### Reference Signs List

- 1: energy supply/demand operation guidance device
- 10: optimization calculation unit
- 11: latest data collection part
- 12: plant operation schedule collection part
- 13: model parameter collection part
- 14: supply/demand prediction part
- 15: plant facility specification collection part
- 16: model calculation part
- 20: display item selection unit
- 30: alarm display unit
- 31: alarm display dialogue screen
- 40: guidance unit
- 41: guidance screen

## Claims

1. An energy supply/demand management guidance device that assists a task of managing supply/demand of gas, steam, and power in an ironworks, **characterized in that** the device comprises:
an optimization calculation unit that uses a plant model and a cost model, the plant model describing a supply/demand balance of the steam and the power in the ironworks, input/output characteristics of a private power generation facility that uses the gas and the steam to generate power and a gas holder that stores the gas, and a gas supply/demand balance among a gas supply quantity of the ironworks, a gas demand quantity of the ironworks, and a gas supply quantity from a gas company, the cost model describing a supply/demand management cost of the ironworks, to predict, based on model parameters composed of a latest value of a variable included in the plant model collected and set values of the plant model and the cost model, optimum supply/demand quantities of the gas, the steam, and the power in the ironworks and a time when a plant management limit is reached;
a display item selection unit that selects at least one selected from at least one of future optimum supply/demand quantities calculated by the optimization calculation unit and a task condition to be changed in a future determined based on current actual supply/demand quantities, and the time when the plant management limit is reached predicted by the optimization calculation unit; and
an alarm output unit that has a function of outputting a display item selected by the display item selection unit.

2. The energy supply/demand management guidance device according to claim 1, wherein
the display item selection unit has a function of previously determining an order of priority and selecting an item to be outputted in a case where there is a plurality of task conditions to be changed in the future for attaining the optimum supply/demand quantities.

3. The energy supply/demand management guidance device according to claim 2, wherein
the display item selection unit has a function of, in deciding the order of priority or in selecting the item to be outputted, learning by using one of the task conditions to be changed that has been outputted in a past and an actual task condition that has actually been changed.

4. The energy supply/demand management guidance device according to claim 1, wherein
the display item selection unit has a function of outputting, as the time when the plant management limit is reached, predicted timing at which upper and lower limits of the gas holder are to be reached and current values thereof.

5. A method of energy supply/demand management in an ironworks, comprising a step of:
performing a task of managing supply/demand of gas, steam, and power in the ironworks in accordance with information outputted from the energy supply/demand management guidance device according to any one of claims 1 to 4.

6. The method of energy supply/demand management in an ironworks according to claim 5, wherein
The outputted information is a guideline for changing a quantity of purchased gas.

7. The method of energy supply/demand management in an ironworks according to claim 5, wherein
The outputted information is a current value of a gas holder level and an amount of time taken to reach an upper limit or a lower limit thereof.

8. The method of energy supply/demand management in an ironworks according to claim 5, wherein
the outputted information is a discharge instruction from the gas holder.
